# EUROPÄISCHE PATENTANMELDUNG

(11) **EP 4 624 599 A1**
(43) Veröffentlichungstag der Anmeldung: **01.10.2025**
(21) Anmeldenummer: 24166137.0
(22) Anmeldetag: 26.03.2024
(51) Int. Cl.: C22B 1/00, C22B 7/00, H01M 6/52, H01M 10/42, H01M 10/54

(54) **VERFAHREN ZUM RECYCLEN VON BATTERIEN**

(71) Anmelder: BHS-Sonthofen GmbH, 87527 Sonthofen (DE)
(72) Erfinder: SPIES, Volker, 87527 Sonthofen (DE)
(74) Vertreter: Weickmann & Weickmann PartmbB

(57) **Zusammenfassung**

Die Erfindung betrifft ein Verfahren zum Recyclen von Batterien, umfassend die Schritte:
- Zerkleinern der Batterien derart, dass Mischgut entsteht, welches Feststoffe und Elektrolyt umfasst,
- Fördern von Mischgut zu einer Zufuhrschleuse (20),
- Überführen von Mischgut in eine Trocknungseinheit (24),
- Kontinuierliches Trocknen von in die Trocknungseinheit (24) eingeführtem Mischgut zusammen mit bereits in der Trocknungseinheit (24) befindlichem Mischgut,
- Kontinuierliches Abführen von Elektrolyt, welcher aus dem Mischgut verdampft ist, aus der Trocknungseinheit (24),
- Austragen von getrocknetem Mischgut aus der Trocknungseinheit (24) mittels einer Austragschleuse (48).

Ferner betrifft die Erfindung eine zugehörige Vorrichtung.

## Beschreibung

Die vorliegende Erfindung betrifft ein Verfahren zum Recyclen von Batterien.

Aus dem Stand der Technik sind Verfahren zum Recyclen von Batterien, bei welchen zu recycelnde Batterien chargenweise getrocknet werden. Hierfür muss die gesamte Recycling-Anlage dazu ausgelegt werden, den chargenweisen Trocknungsbetrieb zu unterstützen, beispielsweise dadurch, dass große Pufferspeicher vorgesehen werden. Ferner stellt ein chargenweiser Betrieb eine große Belastung an sämtliche Dichtungselemente und Erwärmungskomponenten dar, da diese, auf Grund eines oftmals schlagartigen Wechsels des Zustands am Ende einer Chargenbehandlung zu dem Zustand eines Beginns einer Behandlung der nachfolgenden Charge, dauerhaft stark wechselnden Bedingungen ausgesetzt sind.

Es sind auch kontinuierlich betriebene Systeme am Markt verfügbar, die hauptsächlich auf der Basis von Trommeltrocknern arbeiten. Dort wird bei hoher Temperatur der Elektrolyt verbrannt oder unter Luftausschluss pyrolisiert. Nachteile dieser Systeme sind die hohen Temperaturen, die zu einer hohen HF-Belastung des Abgases führen. Trommeltrockner haben ferner den Nachteil, dass sie schwierig dicht zu bekommen sind, da hierfür große Dichtflächen notwendig sind, wodurch eine stabile Pyrolyse zusätzlich erschwert wird.

Es ist daher die Aufgabe der vorliegenden Erfindung, ein im Vergleich zum Stand der Technik verbessertes Verfahren zum Recyclen von Batterien beziehungsweise eine derartige Vorrichtung bereitzustellen.

Diese Aufgabe wird gemäß der vorliegenden Erfindung durch ein Verfahren zum Recyclen von Batterien gelöst, umfassend die folgenden Schritte:
- Zerkleinern der Batterien derart, dass Mischgut entsteht, welches Feststoffe aus zerkleinerten Batterien und Elektrolyt umfasst,
- Fördern von Mischgut zu einer Zufuhrschleuse,
- Überführen von Mischgut mittels der Zufuhrschleuse in eine Trocknungseinheit, welche dazu eingerichtet ist, Mischgut zu trocknen,
- Kontinuierliches Trocknen von in die Trocknungseinheit eingeführtem Mischgut zusammen mit bereits in der Trocknungseinheit befindlichem Mischgut, welches zu einem früheren Zeitpunkt in die Trocknungseinheit eingeführt worden ist,
- Kontinuierliches Abführen von Elektrolyt, welcher aus dem Mischgut verdampft ist, aus der Trocknungseinheit,
- Austragen von getrocknetem Mischgut aus der Trocknungseinheit mittels einer Austragschleuse.

"Kontinuierlich" soll hier den, im Vergleich zum chargenweisen Betrieb, im Wesentlichen unterbrechungsfreien bzw. durchgängigen Betrieb zum Ausdruck bringen. Auch im kontinuierlichen Betrieb kann es jedoch zu gewissen Schwankungen kommen. Im Vergleich zum Chargenbetrieb sind die Schwankungen aber deutlich geringer, insbesondere in Bezug auf Temperaturschwankungen in der Trocknungseinheit. Durch einen solchen kontinuierlichen Betrieb können größere Temperatur- und/oder Druckschwankungen an einer für das Verfahren geeigneten Anlage, insbesondere an der erfindungsgemäßen Vorrichtung, weitestgehend vermieden werden, sodass die Komponenten der Anlage weniger stark beansprucht werden und eine Lebensdauer der Komponenten und damit der Anlage erhöht werden kann.

Ferner kann das erfindungsgemäße Verfahren, insbesondere durch den kontinuierlichen Trocknungsschritt, den Vorteil bieten, dass eine für das Verfahren geeignete Anlage, insbesondere die erfindungsgemäße Vorrichtung, energiesparender betrieben werden kann als eine Anlage mit Chargenbetrieb.

Ein diesen energiesparenden Betrieb ermöglichender Faktor ist es, dass der kontinuierlichen Trocknungsschritt des erfindungsgemäßen Verfahrens, im Vergleich zu bekannten Trommeltrocknern, bei deutlich niedrigeren Temperaturen stattfinden kann.

Beim Abführen von Elektrolyt aus dem Mischgut kann etwa 70% bis 90% des eingangs, das heißt im Bereich der Zerkleinerung, im Mischgut enthaltenen Elektrolyten aus dem Mischgut entfernt und abgeführt, insbesondere wiedergewonnen, werden.

Anders ausgedrückt, können durch das erfindungsgemäße Verfahren Endfeuchten, das heißt ein Feuchtigkeitsgehalt in dem Mischgut, auf welches das erfindungsgemäße Verfahren angewandt worden ist, von bis zu ≤10%, insbesondere von bis zu ≤5%, vorteilhafterweise von bis zu ≤3% erreichbar sein.

Eine Trocknung kann im Rahmen der vorliegenden Erfindung beispielsweise bei einem Druck von 50 mbar bis 750 mbar, insbesondere etwa bei 100 mbar, und/oder bei einer Temperatur von 80°C bis 120°C, insbesondere bei etwa 100°C durchgeführt werden.

Vorteilhafterweise kann das Verfahren vor dem Schritt des Zerkleinerns ferner den Schritt einer Demontage der Batterien in Batterieuntereinheiten umfassen, welche jeweils eine geringere Größe aufweisen als die Batterien. Dies kann ein händisches und/oder automatisiertes Zerlegen der Batterien in die Batterieuntereinheiten umfassen. Zum Beispiel können bei dem Schritt der Demontage der Batterien in Batterieuntereinheiten Umverpackungen der eigentlichen Batteriezellen entfernt werden, sodass sogenannte Batteriepacks in ihre einzelnen Zellen zerlegt werden können.

Insbesondere kann das Fördern von Mischgut unter Verwendung einer Fördereinheit durchgeführt werden, welche dazu eingerichtet ist, Mischgut auf pneumatische und/oder mechanische Weise zu der Zufuhrschleuse zu fördern. Pneumatisch kann die Fördereinheit beispielsweise dadurch betrieben werden, dass Gas entlang der Förderstrecke der Fördereinheit geblasen und/oder gesaugt wird, um das Mischgut zu der Zufuhrschleuse zu fördern. Das Gas kann hierbei Luft und/oder Stickstoff umfassen. Mechanisch kann die Fördereinheit beispielsweise unter Verwendung eines Förderbands oder eines Schneckenförderers betrieben werden.

Ferner kann das Verfahren den Schritt eines kontinuierlichen Kondensierens des aus der Trocknungseinheit abgeführten Elektrolyten umfassen. Auf diese Weise kann der aus dem Mischgut verdampfte Elektrolyt aus der Trocknungseinheit kondensiert und wiedergewonnen werden.

Des Weiteren kann das Verfahren ferner den Schritt eines Erzeugens eines Unterdrucks in der Trocknungseinheit umfassen. Ein Unterdruck in der Trocknungseinheit kann das Verdampfen des Elektrolyten aus dem Mischgut vereinfachen beziehungsweise eine Verdampfungsrate von Elektrolyt aus dem Mischgut steigern.

Dabei kann das Erzeugen des Unterdrucks in der Trocknungseinheit unter Verwendung einer Flüssigkeitsringpumpe stattfinden, welche insbesondere dazu eingerichtet ist, einen Flüssigkeitsring unter Verwendung von Elektrolyt zu erzeugen. Die Ausbildung des Flüssigkeitsrings in der Flüssigkeitsringpumpe kann insbesondere unter Verwendung desjenigen Elektrolyten stattfinden, welcher aus der Trocknungseinheit abgeführt und anschließend kondensiert worden ist.

Betrachtet in Bezug auf eine Materialstromrichtung von Mischgut, kann ein Druck stromaufwärts der Zufuhrschleuse verschieden, insbesondere höher, sein als ein Druck stromabwärts der Zufuhrschleuse. Beispielsweise kann stromaufwärts der Zufuhrschleuse im Wesentlichen Umgebungsdruck herrschen, wohingegen stromabwärts der Zufuhrschleuse im Wesentlichen derjenige Druck herrschen kann, welcher auch innerhalb der Trocknungseinheit vorliegt. Wie weiter unten mit Bezug auf die erfindungsgemäße Vorrichtung beschrieben werden wird, kann die Zufuhrschleuse insbesondere dazu eingerichtet sein, wahlweise einen Druckausgleich zu dem stromaufwärts der Zufuhrschleuse herrschenden Druck und zu dem stromabwärts der Zufuhrschleuse herrschenden Druck durchzuführen.

Das Verfahren kann ferner den Schritt eines Erwärmens von in der Trocknungseinheit befindlichem Mischgut umfassen. Auch das Erwärmen von Mischgut kann das Verdampfen des Elektrolyten aus dem Mischgut vereinfachen beziehungsweise eine Verdampfungsrate von Elektrolyt aus dem Mischgut steigern.

Um eine Durchmischung von neu in die Trocknungseinheit eingeführtem Mischgut mit bereits in der Trocknungseinheit befindlichem Mischgut zu verbessern, kann das Verfahren ferner den Schritt eines Umwälzens von Mischgut während des Trocknungsschritts umfassen. Zu diesem Zweck kann die Trocknungseinheit eine Welle umfassen, welche drehbar an einem Gehäuse der Trocknungseinheit gelagert ist. An der Welle können nur Mischschaufeln angeordnet sein, welche zusammen mit der Welle rotieren, wenn diese von einem Motor angetrieben wird, und welche derart angeordnet sind, dass sie das Mischgut innerhalb der Trocknungseinheit durchmischen.

Ferner kann das Verfahren den Schritt eines Vortrocknens stromaufwärts und/oder innerhalb der Zufuhrschleuse umfassen. Somit kann bereits in einem Bereich der Zufuhrschleuse eine Vorverdampfung von Elektrolyt aus dem Mischgut durchgeführt werden. Der in dieser Vorverdampfung abgeführte Elektrolyt kann anschließend dem aus der Trocknungseinheit direkt abgeführten Elektrolyt zugeführt werden oder analog zu dessen Behandlung behandelt werden. Durch die Vorverdampfung im Bereich der Zufuhrschleuse ergibt sich eine Zwei-Stufen-Trocknung des Mischguts in dem erfindungsgemäßen Verfahren.

In einem weiteren Aspekt wird die eingangs erwähnte Aufgabe durch eine Vorrichtung zum Recyclen von Batterien gelöst, umfassend
- eine Zerkleinerungseinheit, welche derart zum Zerkleinern der Batterien eingerichtet ist, dass Mischgut entsteht, welches Feststoffe aus zerkleinerten Batterien und Elektrolyt umfasst,
- eine Fördereinheit, welche zum Fördern von Mischgut zu einer Zufuhrschleuse eingerichtet ist,
- eine Trocknungseinheit, welche dazu eingerichtet ist, mittels der Zufuhrschleuse in die Trocknungseinheit überführtes Mischgut zu trocknen,
- wobei die Trocknungseinheit dazu eingerichtet ist, in die Trocknungseinheit eingeführtes Mischgut zusammen mit bereits in der Trocknungseinheit befindlichem Mischgut, welches zu einem früheren Zeitpunkt in die Trocknungseinheit eingeführt worden ist, kontinuierlich zu trocknen,
- eine Elektrolyt-Abführeinheit, welche dazu eingerichtet ist, Elektrolyt, welcher aus dem Mischgut verdampft ist, aus der Trocknungseinheit kontinuierlich abzuführen,
- eine Austragschleuse, welche dazu eingerichtet ist, getrocknetes Mischgut aus der Trocknungseinheit auszutragen.

Bereits an dieser Stelle sei darauf hingewiesen, dass sämtliche in Bezug auf das erfindungsgemäße Verfahren erwähnten Merkmale, Funktionen und Vorteile auch auf die erfindungsgemäße Vorrichtung anwendbar sein können, und umgekehrt. Insbesondere kann die erfindungsgemäße Vorrichtung dazu eingerichtet sein, das erfindungsgemäße Verfahren zu realisieren.

Die Zerkleinerungseinheit kann in einer Gasumgebung, insbesondere Stickstoff und/oder Luft, oder in einer Flüssigkeitsumgebung, insbesondere Wasser, betreibbar sein. Beispielsweise kann bei einem Betrieb der Zerkleinerungseinheit in einer Strickstoffumgebung und/oder einer Flüssigkeitsumgebung eine Explosionsgefahr und damit eine Gefährdung für Benutzer der Vorrichtung und/oder eine Beschädigung der Vorrichtung reduziert, wenn nicht sogar vermieden, werden.

Die Vorrichtung kann wenigstens einen Zwischenspeicher zum temporären Speichern von Mischgut umfassen. Zum Beispiel kann jeweils vor einer Fördereinheit ein Zwischenspeicher angeordnet sein, um ein gleichmäßiges Beschicken der Fördereinheit und somit eine Förderung des Mischguts zu ermöglichen. Ein solcher Zwischenspeicher kann beispielsweise eine maximale Durchsatzleistung von 2 to/h und/oder ein maximales Fassungsvermögen von 1 m³ aufweisen.

Die Elektrolyt-Abführeinheit kann wenigstens einen Filter umfassen, der dazu eingerichtet ist, Fremdstoffe, insbesondere Feststoffe, davon abzuhalten, aus der Trocknungseinheit auszutreten.

In einer Weiterbildung der erfindungsgemäßen Vorrichtung kann die Zufuhrschleuse und/oder die Austragschleuse dazu geeignet sein, in einem Schleusenvolumen davon selektiv einen stromaufwärts der Zufuhrschleuse bzw. der Austragschleuse vorherrschenden Druck oder einen stromabwärts der Zufuhrschleuse bzw. der Austragschleuse vorherrschenden Druck anzunehmen, wobei die Zufuhrschleuse und/oder die Austragschleuse insbesondere wenigstens eines aus einer Drehschleuse, einer Doppelklappenschleuse, einem Schwenkschieber, einer Schwenkklappe, einem Kugelsegmentventil und einem Quetschventil umfassen kann. So kann das Schleusenvolumen beispielsweise auf einen in einer stromaufwärts angeordneten Fördereinheit herrschenden Druck, zum Beispiel Umgebungsdruck, oder auf einen in der Trocknungseinheit herrschenden Druck, zum Beispiel einen Unterdruck von 100 mbar, gebracht werden.

Die Zufuhrschleuse und/oder die Austragschleuse kann ferner eine Dichtungseinheit umfassen, welche dazu eingerichtet ist, ein bewegliches Element der Zufuhrschleuse und/oder der Austragschleuse abzudichten, zum Beispiel zu einem diese umgebenden Gehäuse hin. Die Dichtungseinheit kann einen konischen Verlauf aufweisen, um auf eine Bewegung des beweglichen Elements abgestimmt zu sein und so eine Dichtungswirkung verbessern zu können. Die Dichtungseinheit kann dabei eine pneumatische Dichtungseinheit sein, welche eine Dichtungswirkung des Dichtungselements durch ein in der Dichtungseinheit vorliegendes Gas erreicht bzw. verstärkt.

Ferner kann die Vorrichtung eine Heizeinheit umfassen, welche dazu eingerichtet ist, ein die Trocknungseinheit und/oder die Zufuhrschleuse umgebendes Gehäuse zu erwärmen. Durch das Erwärmen der Gehäusewand kann Wärmeenergie an einen Innenraum des Gehäuses und damit an das Mischgut abgegeben werden. Das Erwärmen des Mischguts kann ein Verdampfen von Elektrolyt, insbesondere zusätzlich zum Unterdruck in der Trocknungseinheit, fördern und damit eine Verdampfungsrate von Elektrolyt aus dem Mischgut steigern.

Vorteilhafterweise kann die Vorrichtung ferner einen Elektrolyt-Kondensator umfassen, welcher dazu eingerichtet ist, den aus der Trocknungseinheit abgeführten Elektrolyten kontinuierlich zu kondensieren. Durch das kontinuierliche Abführen und Kondensieren von Elektrolyt kann dieser aus dem Mischgut wiedergewonnen, gesammelt und ggf. zur Wiederverwendung neu ausbereitet werden. Dem Elektrolyt-Kondensator kann hierfür ein Elektrolyt-Sammelbehälter zugeordnet sein.

Um den Elektrolyt aus der Trocknungseinheit kontinuierlich abführen und zu dem Elektrolyt-Kondensator leiten zu können, kann der Elektrolyt-Kondensator fluidisch mit einer Flüssigkeitsringpumpe verbunden sein, welche dazu eingerichtet ist, in der Trocknungseinheit einen Unterdruck zu erzeugen. Die Flüssigkeitsringpumpe kann dabei dazu eingerichtet sein, einen Flüssigkeitsring unter Verwendung von Elektrolyt zu erzeugen. Hierfür kann insbesondere derjenige Elektrolyt verwendbar sein, welcher bereits zuvor durch den Elektrolyt-Kondensator als aus dem Mischgut verdampfter Elektrolyt wiedergewonnen und kondensiert wurde. Beispielsweise kann die Flüssigkeitsringpumpe mit dem Elektrolyt-Sammelbehälter fluidisch verbunden sein.

Die Vorrichtung kann ferner eine Sortiereinrichtung umfassen beziehungsweise mit einer Sortiereinrichtung verbunden sein, welche dazu eingerichtet ist, das aus der Trocknungseinheit abgeführte Mischgut zu sortieren. Eine derartige Sortierung kann beispielsweise auf Grundlage des Materials und/oder der Größe und/oder des Gewichts der Bestandteile des Mischguts durchgeführt werden. So kann der weiter oben erwähnten Austragschleuse ein Empfangsbehälter nachgelagert sein, welcher dazu eingerichtet ist, aus der Trocknungseinheit abgeführtes Mischgut aufzunehmen und an die Sortiereinrichtung zu überführen. Dem Empfangsbehälter kann dabei eine weitere Unterdruckpumpe zugeordnet sein, um eine pneumatische Förderung von Mischgut zu dem Empfangsbehälter hin und somit in Richtung der Sortiereinrichtung zu ermöglichen.

Im Folgenden wird die Erfindung anhand eines Ausführungsbeispiels mit Bezug auf die begleitende Zeichnung in größerem Detail beschrieben werden. Es stellt dar:

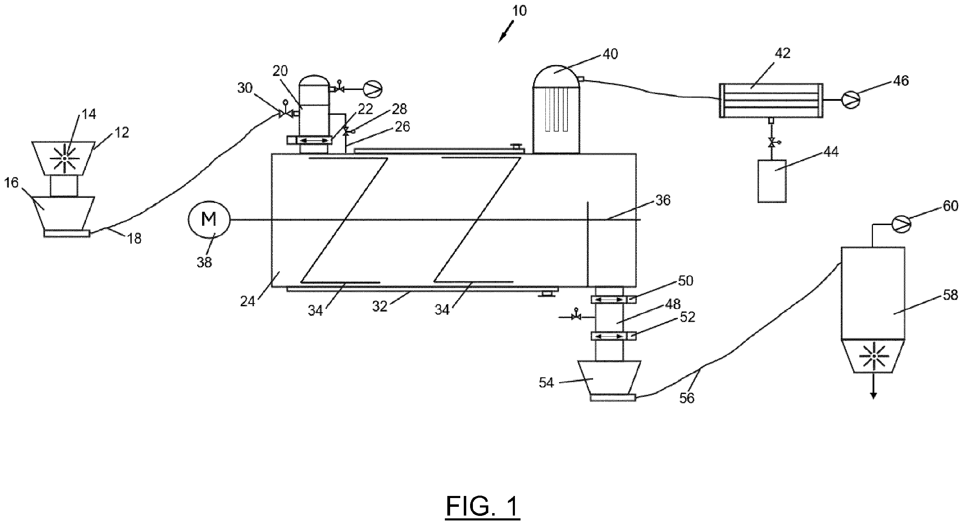

- Figur 1: eine schematische Darstellung einer erfindungsgemäßen Vorrichtung zum Recyclen von Batterien.

In der schematischen Darstellung von Figur 1 ist eine erfindungsgemäße Vorrichtung zum Recyclen von Batterien allgemein mit dem Bezugszeichen 10 bezeichnet. Die Vorrichtung 10 umfasst einen Einfülltrichter 12, in welchen zu recyclende Batterien oder Unterkomponenten davon, welche bereits einen Demontageschritt durchlaufen haben, eingefüllt werden können.

In der in Figur 1 dargestellten Ausführungsform ist in dem Einfülltrichter 12 eine Zerkleinerungseinheit 14 vorgesehen, welche derart zum Zerkleinern der Batterien eingerichtet ist, dass Mischgut entsteht, welches Feststoffe aus zerkleinerten Batterien und Elektrolyt umfasst. Die Zerkleinerungseinheit 14 kann in einer Gasumgebung oder in einer Flüssigkeitsumgebung betrieben werden. Zum Beispiel kann die Zerkleinerungseinheit 14 ein mechanischer Schredder sein. Die Schneidwerkzeuge des Schredders können somit in dessen Betriebszustand von Gas, insbesondere von Luft oder Stickstoff als Inertisierung, oder von einer Flüssigkeit, insbesondere von Wasser, umgeben sein.

In Bezug auf eine Förderrichtung des Mischguts entlang der in Figur 1 dargestellten Vorrichtung 10 betrachtet, ist stromabwärts der Zerkleinerungseinheit 14 ein erster Zwischenspeicher 16 angeordnet. Der erste Zwischenspeicher 16 ist hier insbesondere dazu eingerichtet, Mischgut zwischenzuspeichern, bevor dieses über eine dem ersten Zwischenspeicher 16 nachgelagerte erste Fördereinheit 18 weiterbefördert wird. Die erste Fördereinheit 18 kann hier eine mechanische Fördereinheit, wie beispielsweise ein Förderband, und/oder eine pneumatische Fördereinheit, insbesondere eine Saugfördereinheit sein, welche beispielsweise Stickstoff verwendet, um das Mischgut aus dem ersten Zwischenspeicher 16 zu einer Zufuhrschleuse 20 hin zu transportieren.

Die Zufuhrschleuse 20 umfasst hier einen Schwenkschieber 22, welcher dazu eingerichtet ist, ein Schleusenvolumen der Zufuhrschleuse 20 zu einer in Figur 1 dargestellten unteren Seite der Zufuhrschleuse 20 hin und damit zu einer Trocknungseinheit 24 zu öffnen beziehungsweise zu schließen. Da in der gezeigten Ausführungsform in einem Innenraum der Trocknungseinheit 24 ein Unterdruck herrscht, ist die Zufuhrschleuse 20 dazu eingerichtet, vor einem Öffnen des Schwenkschiebers 22 einen Druckausgleich zu dem Innenraum der Trocknungseinheit 24 herzustellen. Zu diesem Zweck ist der Innenraum der Trocknungseinheit 24 mit dem Schleusenvolumen der Zufuhrschleuse 20 über eine Druckausgleichsleitung 26 verbunden. In der Druckausgleichsleitung 26 ist hier ein erstes Absperrventil 28 angeordnet, welches dazu eingerichtet ist, einen Fluiddurchgang durch die Druckausgleichsleitung 26 zu verhindern beziehungsweise diesen freizugeben. Ein zweites Absperrventil 30 ist in der ersten Fördereinheit 18 angeordnet, welches ebenfalls dazu eingerichtet ist, das Schleusenvolumen der Zufuhrschleuse 20 zu einer Seite stromaufwärts des zweiten Absperrventils 30 hin fluidisch zu trennen beziehungsweise zu verbinden. Ist nun das erste Absperrventil 28 geschlossen und das zweite Absperrventil 30 geöffnet, so herrscht in der Zufuhrschleuse 20 im Wesentlichen derselbe Druck wie in der ersten Fördereinheit 18, beispielsweise Umgebungsdruck, und die Zufuhrschleuse 20 kann mit Mischgut beschickt werden. Soll nun das Mischgut, welches sich in der Zufuhrschleuse 20 befindet, in die Trocknungseinheit 24 geladen werden, so wird das zweite Absperrventil 30 geschlossen und das erste Absperrventil 28 geöffnet, sodass sich der in dem Schleusenvolumen der Zufuhrschleuse vorherrschende Druck dem in der Trocknungseinheit 24 vorherrschenden Druck angleicht. Anschließend kann der Schwenkschieber 22 geöffnet werden und das Mischgut in die Trocknungseinheit 24 überführt werden.

Wie bereits voranstehend beschrieben, herrscht in einem Innenraum der Trocknungseinheit 24 ein Unterdruck von beispielsweise 100 mbar. Zusätzlich wird über eine Heizeinheit, welche in der hier dargestellten Ausführungsform in einem Gehäuse 32 der Trocknungseinheit 24 angeordnet ist, der Innenraum der Trocknungseinheit 24 erwärmt, beispielsweise auf in etwa 100°C. Das in die Trocknungseinheit 24 neu eingeführte Mischgut vermischt sich dort mit bereits in der Trocknungseinheit 24 befindlichem Mischgut, sodass Wärmeenergie von dem bereits erwärmten Mischgut an das neu eingeführte Mischgut abgegeben wird. Um diesen Effekt zu unterstützen, sind in dem Innenraum der Trocknungseinheit 24 Mischschaufeln 34 angeordnet, welche mit einer gemeinsamen Welle 36 verbunden sind, wobei die Welle 36 über einen Motor 38 in Rotation versetzt wird, sodass sich die Mischschaufeln 34 relativ zu dem Gehäuse 32 der Trocknungseinheit 24 drehen.

Aufgrund der in der Trocknungseinheit 24 vorliegenden Umgebungsparameter, Unterdruck und Erwärmung, verdampft der Elektrolyt aus dem Mischgut. Über eine Elektrolyt-Abführeinheit 40 wird nun der verdampfte Elektrolyt aus dem Innenraum der Trocknungseinheit 24 kontinuierlich abgeführt, wobei der Elektrolyt dabei insbesondere wenigstens einen Filter passieren kann, um Feststoffe auszufiltern. An die Elektrolyt-Abführeinheit 40 schließt sich ein Elektrolyt-Kondensator 42 an, welcher dazu eingerichtet ist, den aus der Trocknungseinheit 24 abgeführten Elektrolyten kontinuierlich zu kondensieren. Der kondensierte Elektrolyt wird dann in einem Elektrolyt-Sammelbehälter 44 gesammelt. Um ein Abführen des verdampften Elektrolyten aus der Trocknungseinheit 24 über die Elektrolyt-Abführeinheit 40 zu dem Elektrolyt-Kondensator 42 zu ermöglichen, ist in der hier dargestellten Ausführungsform der Elektrolyt-Kondensator 42 mit einer Unterdruckpumpe 46, im gezeigten Ausführungsbeispiel einer Flüssigkeitsringpumpe 46, verbunden.

An dem in Figur 1 rechten unteren Ende der Trocknungseinheit 24 ist der Innenraum der Trocknungseinheit 24 mit einer Austragschleuse 48 verbunden, welche dazu eingerichtet ist, getrocknetes Mischgut aus der Trocknungseinheit 24 auszutragen. Die Austragschleuse 48 umfasst hier einen ersten Schwenkschieber 50 und einen zweiten Schwenkschieber 52. Analog zu der Funktionsweise der Zufuhrschleuse 20 ist auch die Austragschleuse 48 dazu eingerichtet, wahlweise einen Druckausgleich mit dem Innenraum der Trocknungseinheit 24 oder einen Druckausgleich mit einer stromabwärtigen Seite der Austragschleuse 48 durchzuführen. Hat ein Schleusenvolumen der Austragschleuse 48 einen Druckausgleich mit dem Innenraum der Trocknungseinheit 24 durchgeführt, so kann der erste Schwenkschieber 50 geöffnet werden und getrocknetes Mischgut kann in das Schleusenvolumen der Austragschleuse 48 eingeführt werden. Anschließend wird der erste Schwenkschieber 50 geschlossen und das Schleusenvolumen der Austragschleuse 48 wird auf denjenigen Druck gebracht, welcher stromabwärts des zweiten Schwenkschiebers 52 herrscht, was in der gezeigten Ausführungsform einem Umgebungsdruck entspricht. Ist dieser Druckausgleich durchgeführt, wird der zweite Schwenkschieber 52 geöffnet und das Mischgut wird aus dem Schleusenvolumen der Austragschleuse 48 in einen zweiten Zwischenspeicher 54 eingebracht, dessen Funktionsweise im Wesentlichen der des ersten Zwischenspeichers 16 entspricht.

Dem zweiten Zwischenspeicher 54 ist wiederum eine zweite Fördereinheit 56 zugeordnet, über welche das sich in dem zweiten Zwischenspeicher 54 befindliche Mischgut mechanisch und/oder pneumatisch abtransportiert werden kann.

In der in Figur 1 dargestellten Ausführungsform ist zusätzlich ein Empfangsbehälter 58 dargestellt, welcher mit einem stromabwärtigen Ende der zweiten Fördereinheit 56 verbunden ist und welcher dazu eingerichtet ist, das getrocknete Mischgut temporär aufzunehmen. Dem Empfangsbehälter 58 kann dann eine Sortiereinrichtung (nicht dargestellt) nachgelagert sein, welche dazu eingerichtet ist, das getrocknete Mischgut zu sortieren. Eine derartige Sortierung kann beispielsweise auf Grundlage des Materials und/oder der Größe und/oder des Gewichts der Bestandteile des Mischguts durchgeführt werden.

Um eine pneumatische Förderung entlang der zweiten Fördereinheit 56 zu ermöglichen, ist hier der Empfangsbehälter 58 beziehungsweise die zweite Fördereinheit 56 mit einer Unterdruckpumpe 60 verbunden.

## Patentansprüche

1. Verfahren zum Recyclen von Batterien, umfassend die folgenden Schritte:
- Zerkleinern der Batterien derart, dass Mischgut entsteht, welches Feststoffe aus zerkleinerten Batterien und Elektrolyt umfasst,
- Fördern von Mischgut zu einer Zufuhrschleuse (20),
- Überführen von Mischgut mittels der Zufuhrschleuse (20) in eine Trocknungseinheit (24), welche dazu eingerichtet ist, Mischgut zu trocknen,
- Kontinuierliches Trocknen von in die Trocknungseinheit (24) eingeführtem Mischgut zusammen mit bereits in der Trocknungseinheit (24) befindlichem Mischgut, welches zu einem früheren Zeitpunkt in die Trocknungseinheit (24) eingeführt worden ist,
- Kontinuierliches Abführen von Elektrolyt, welcher aus dem Mischgut verdampft ist, aus der Trocknungseinheit (24),
- Austragen von getrocknetem Mischgut aus der Trocknungseinheit (24) mittels einer Austragschleuse (48).

2. Verfahren nach Anspruch 1,
**dadurch gekennzeichnet, dass** das Verfahren vor dem Schritt des Zerkleinerns ferner den Schritt umfasst:
- Demontage der Batterien in Batterieuntereinheiten, welche jeweils eine geringere Größe aufweisen als die Batterien.

3. Verfahren nach einem der vorhergehenden Ansprüche,
**dadurch gekennzeichnet, dass** das Fördern von Mischgut unter Verwendung einer Fördereinheit (18) durchgeführt wird, welche dazu eingerichtet ist, Mischgut auf pneumatische und/oder mechanische Weise zu der Zufuhrschleuse (20) zu fördern.

4. Verfahren nach einem der vorhergehenden Ansprüche,
**dadurch gekennzeichnet, dass** das Verfahren ferner den Schritt umfasst:
- kontinuierliches Kondensieren des aus der Trocknungseinheit (24) abgeführten Elektrolyten.

5. Verfahren nach einem der vorhergehenden Ansprüche,
**dadurch gekennzeichnet, dass** das Verfahren ferner den Schritt umfasst:
- Erzeugen eines Unterdrucks in der Trocknungseinheit (24).

6. Verfahren nach dem vorhergehenden Anspruch,
**dadurch gekennzeichnet, dass** das Erzeugen des Unterdrucks in der Trocknungseinheit (24) unter Verwendung einer Flüssigkeitsringpumpe (46) stattfindet, welche insbesondere dazu eingerichtet ist, einen Flüssigkeitsring unter Verwendung von Elektrolyt zu erzeugen.

7. Verfahren nach einem der vorhergehenden Ansprüche,
**dadurch gekennzeichnet, dass**, betrachtet in Bezug auf eine Materialstromrichtung von Mischgut, ein Druck stromaufwärts der Zufuhrschleuse (20) verschieden, insbesondere höher, ist als ein Druck stromabwärts der Zufuhrschleuse (20).

8. Verfahren nach einem der vorhergehenden Ansprüche,
**dadurch gekennzeichnet, dass** das Verfahren ferner den Schritt umfasst:
- Erwärmen von in der Trocknungseinheit (24) befindlichem Mischgut.

9. Verfahren nach einem der vorhergehenden Ansprüche,
**dadurch gekennzeichnet, dass** das Verfahren ferner den Schritt umfasst:
- Umwälzen von Mischgut während des Trocknungsschritts.

10. Verfahren nach einem der vorhergehenden Ansprüche,
**dadurch gekennzeichnet, dass** das Verfahren ferner den Schritt umfasst:
- Vortrocknen stromaufwärts und/oder innerhalb der Zufuhrschleuse (20).

11. Vorrichtung (10) zum Recyclen von Batterien, umfassend
- eine Zerkleinerungseinheit (14), welche derart zum Zerkleinern der Batterien eingerichtet ist, dass Mischgut entsteht, welches Feststoffe aus zerkleinerten Batterien und Elektrolyt umfasst,
- eine Fördereinheit (18), welche zum Fördern von Mischgut zu einer Zufuhrschleuse (20) eingerichtet ist,
- eine Trocknungseinheit (24), welche dazu eingerichtet ist, mittels der Zufuhrschleuse (20) in die Trocknungseinheit (24) überführtes Mischgut zu trocknen,
wobei die Trocknungseinheit (24) dazu eingerichtet ist, in die Trocknungseinheit (24) eingeführtes Mischgut zusammen mit bereits in der Trocknungseinheit (24) befindlichem Mischgut, welches zu einem früheren Zeitpunkt in die Trocknungseinheit (24) eingeführt worden ist, kontinuierlich zu trocknen,
- eine Elektrolyt-Abführeinheit, welche dazu eingerichtet ist, Elektrolyt, welcher aus dem Mischgut verdampft ist, aus der Trocknungseinheit (24) kontinuierlich abzuführen,
- eine Austragschleuse (48), welche dazu eingerichtet ist, getrocknetes Mischgut aus der Trocknungseinheit (24) auszutragen.

12. Vorrichtung (10) nach Anspruch 11,
**dadurch gekennzeichnet, dass** die Zufuhrschleuse (20) und/oder die Austragschleuse (48) dazu geeignet sind/ist, in einem Schleusenvolumen davon selektiv einen stromaufwärts der Zufuhrschleuse (20) bzw. der Austragschleuse (48) vorherrschenden Druck oder einen stromabwärts der Zufuhrschleuse (20) bzw. der Austragschleuse (48) vorherrschenden Druck anzunehmen, wobei die Zufuhrschleuse (20) und/oder die Austragschleuse (48) insbesondere wenigstens eines aus einer Drehschleuse, einer Doppelklappenschleuse, einem Schwenkschieber (22, 50, 52), einer Schwenkklappe, einem Kugelsegmentventil (28, 30) und einem Quetschventil umfassen/umfasst.

13. Vorrichtung (10) nach Anspruch 11 oder 12,
**dadurch gekennzeichnet, dass** die Vorrichtung (10) ferner eine Heizeinheit umfasst, welche dazu eingerichtet ist, ein die Trocknungseinheit (24) und/oder die Zufuhrschleuse (20) umgebendes Gehäuse (32) zu erwärmen.

14. Vorrichtung (10) nach einem der Ansprüche 11 bis 13,
**dadurch gekennzeichnet, dass** die Vorrichtung (10) ferner einen Elektrolyt-Kondensator (42) umfasst, welcher dazu eingerichtet ist, den aus der Trocknungseinheit (24) abgeführten Elektrolyten kontinuierlich zu kondensieren.

15. Vorrichtung (10) nach Anspruch 14,
**dadurch gekennzeichnet, dass** der Elektrolyt-Kondensator (42) fluidisch mit einer Flüssigkeitsringpumpe (46) verbunden ist, welche dazu eingerichtet ist, in der Trocknungseinheit (24) einen Unterdruck zu erzeugen.
